# EUROPEAN PATENT SPECIFICATION

(11) **EP 4 094 869 B1**
(45) Date of publication and mention of the grant of the patent: **20.08.2025**
(21) Application number: 22173449.4
(22) Date of filing: 16.05.2022
(51) Int. Cl.: B23D 47/04, B27B 5/065

(54) **MACHINE FOR CUTTING PANELS**
PLATTENSÄGEMASCHINE
SCIE MÉCANIQUE

(30) Priority: 27.05.2021 IT 202100013838
(43) Date of publication of application: 30.11.2022
(73) Proprietor: SCM Group S.p.A., 47921 Rimini (RN) (IT)
(72) Inventor: MANDOLESI, Stefano, 47921 RIMINI (IT)
(74) Representative: Tiburzi, Andrea

(56) References cited:
- EP-A1- 3 563 959
- BR-A2- PI0 904 723

## Description

The present invention relates to a machine for cutting panels.

### Field of the invention

More in detail, the invention relates to a cutting machine, in particular for cutting panels, in which, for example, the panels (packs of panels) are pushed forward intermittently along a supplying direction (horizontal) through a cutting station, in which the panels themselves (packs of panels) are cut along a cutting plane (vertical), transversal to the supplying direction.

Specifically, but not exclusively, the present invention can be used for working products (panels or packs of panels) made of wood, materials obtained from wood or wood-like materials.

In the following, reference will always be made to the cutting of single panels, but it is understood that what is described here can be applied to the cutting of packs of panels as well.

### Prior art

Cutting machines are known in the field of the wood panel working. These cutting machines generally have a horizontal supporting plane for the panel, means for supplying the panel on the supporting plane in a supplying direction, a cutting station towards which the panel is supplied, and a pressing device, movable between a lower position for clamping the panel in the cutting station, and an upper position for releasing it. Known cutting machines also comprise a cutting device, which is movable along a cutting direction (the so-called cutting line), which is directed transversely with respect to the supplying direction.

The panel supplying means, commonly called "pusher", consist of a system of clamps adapted to grip the rear portion of the panel with respect to the supplying direction. This gripper system is supported above said supporting plane by a supporting structure, which is movable along the supplying direction by means of actuator means.

In order to carry out the simultaneous cutting of two panels, there are also known cutting machines that have first and second panels supplying means, which are movable, independently of each other, along the supplying direction. In particular, each of said supplying means has respective actuator members. In this way, it is possible to make the so-called staggered or differential cuts, i.e. the simultaneous cutting of two panels positioned along the supplying direction at different heights, or positions. In this way, each panel is clamped by a distinct system of clamps associated respectively with said first and second panel supplying means.

The prior art comprises the patent application EP 2316602 A1, which describes a cutting machine having first and second panels supplying means that are movable in the supplying direction independently of each other.

The first panels supplying means slide above a first portion of the horizontal supporting plane and define a first working area. Similarly, the second panels supplying means, sliding above a second portion of the supporting plane, distinct from said first portion of the supporting plane, define a second working area, also distinct from said first work area. Said first and second working area have, in plan, two finite and fixed widths, the sum of which is substantially equal to the length of the cutting line.

In the patent publication EP 2111939 A2 a cutting machine is described, equipped with first and second panels supplying means that are movable, independently of each other, along_the supplying direction. The second advancing means are also movable transversely with respect to the supplying direction and are capable of assuming a first exclusion position, in which the respective gripper system, with which it is equipped, is positioned outside the supporting plane, and a second working position, in which the respective gripper system is positioned above the supporting plane. In this second working position, the second supplying means can clamp a second panel in order to make differential cuts.

The gripper system associated with the first supplying means are, in plan, all contained in a portion of the supporting plane in such a way that, when the gripper system, associated with the second supplying means, is in the second working position, the latter don't interfere with them. When they are in said second working position, the two working areas, defined by the first gripper system, associated with the first panels supplying means, and by the second gripper system, associated with the second panels supplying means, have, in plan, two finite and fixed widths, the sum of which is substantially equal to the length of the cutting line. BR PI0 904 723 A2 discloses a machine for cutting panels according to the preamble of claim 1.

The cutting machines belonging to the prior art have, therefore, the drawback of being rigid when the format of the panels is changed, or when their dimensions are changed. In fact, having two working areas characterized by finite and fixed widths, they are bound to the precise maximum dimensions of the panels to be cut. In other words, the staggering cuts can be performed on two panels of a defined and non-modifiable maximum width. This greatly limits the possible cutting patterns.

Furthermore, since the center-distance between the clamps, which form the first or second gripper system, cannot be varied, it is not always possible to correctly grip the panels. If a panel is not properly and optimally gripped, it can skid during the supplying motion. The badly oriented panel can hit the adjacent panel during the staggered cut, creating defects in the panels themselves. Furthermore, incorrect orientation of the panel generates a parallelism error of the piece thus worked.

### Scope of the invention

The scope of the present invention is to provide a solution for cutting panels that has two working areas, so as to carry out differential cuts having variable widths.

A further scope of the present invention is that of gripping panels of different dimensions in a more precise and safe manner, with different means for advancing the panel.

### Object of the invention

These and other results are obtained according to the invention of a machine for cutting panels according to claim 1.

Always according to the invention, said first supporting system may support a plurality of first clamps, in that at least one subset of said plurality of first clamps is movable with respect to said first supporting system along said cutting direction, and said at least one subset of said plurality of first clamps is facing said second working area.

Still according to the invention, said first clamps of said at least one subset of said plurality of first clamps may be movable with respect to said first supporting system in an integral or independent way, in particular by means of respective first actuator means associated with them, or in a hybrid way.

Advantageously, according to the invention, said first clamps may be movable with respect to said first supporting system in a continuous way or in discrete steps.

Further according to the invention, said second supporting system may support a plurality of second clamps, in that at least one subset of said plurality of second clamps is movable with respect to said second supporting system parallel to said cutting direction, and in that said at least one subset of said plurality of second clamps is facing said first working area.

Preferably according to the invention, said second clamps of said at least one subset of said plurality of second clamps may be movable with respect to said second supporting system in an integral or independent way, in particular by means of respective second actuator means associated with them, or in a hybrid way.

Always according to the invention, said second clamps may be movable with respect to said second supporting system in a continuous way or in discrete steps.

Still according to the invention, said machine may comprise a sensor system capable of detecting a possible interference between said first supplying means and said second supplying means, in particular between said first clamps and said second clamps, wherein said sensor system is configured for generating an alarm signal and for sending said alarm signal to an electronic control system.

Advantageously according to the invention, said sensor system may be coupled to said first clamps and/or to said second clamps.

Preferably according to the invention, said sensor system may comprise inductive sensors and/or optical sensors and/or ultrasonic sensors and/or laser sensors and/or electromechanical sensors.

Further according to the invention, said alarm signal is sent to a remote server and/or mobile device.

Always according to the invention, said alarm signal may be detected by an operator, said signal being transformed into a video and/or audio and/or vibrational signal.

Still according to the invention, said first supporting system and said second supporting system can be coupled to said frame, wherein said first supplying means and said second supplying means slide over each other as necessary without interfering along said supplying direction.

Advantageously according to the invention, said second supporting system may be movable with respect to said frame along said cutting direction, wherein said second supporting system has a first exclusion position, wherein said second clamps are arranged, in plan, out of said second working area, and a second working area, wherein said second clamps are arranged, in plan, in said second working area, in particular above said supporting plane.

### Brief description of the figures

The present invention will be now described, for illustrative but not limitative purposes, according to its preferred embodiments, with particular reference to the figures of the enclosed drawings, wherein:
figure 1 shows a schematic plan view of a cutting machine realized according to the present invention;
figure 2 shows a second schematic plan view of a cutting machine realized according to the present invention;
figure 3 shows a third schematic plan view of a cutting machine realized according to the present invention;
figure 4 shows a fourth schematic plan view of a cutting machine realized according to the present invention; and
figure 5 shows a fifth plan view of a cutting machine realized according to the present invention.
figure 6 shows a front view of a first detail of cutting machine realized according to the present invention.
figure 7a shows a perspective view of a second detail of a cutting machine realized according to the present invention, in a first operating position.
figure 7b shows a perspective view of said second detail of a cutting machine realized according to the present invention, in a second operating position.

In the various figures, similar parts will be indicated with the same numerical references.

### Detailed description

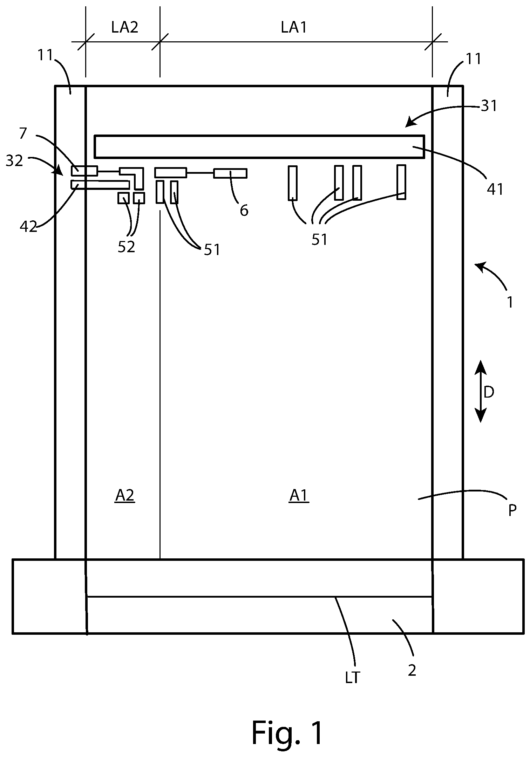

Referring to figure 1, a plan view of the cutting machine (or panel saw) for cutting panels is schematically shown. As already mentioned, in the following description, reference will always be made to the cutting of individual panels, but what it is described here can be applied to cutting packs of panels, as well.

The cutting machine M comprises a frame 1, which in turn comprises a supporting plane P for supporting the panels to be cut.

The cutting machine M also comprises a cutting station 2 arranged at one end of the supporting plane. Said cutting station 2 comprises a pressing device (not shown in the figure), movable between a lower position for clamping the panel, in which the panel is held by a force from the top to the bottom against said supporting plane P, and a releasing upper position, in which the panel is free to be moved on said supporting plane P.

Said cutting station 2 further comprises a cutting device (not shown in the figure as well), provided with a cutting tool, and is movable along a cutting direction LT (or cutting line), to divide (or section) the panel along a orthogonal (vertical) plane to said supporting plane P.

Furthermore, said cutting device is movable along an orthogonal (vertical) direction with respect to the cutting direction LT, to adjust the height of said cutting tool with respect to the supporting plane P, so that said cutting tool can be positioned below said supporting plane P in a non-operative position, or can project with respect to it in an operative position.

In some embodiments, said cutting device comprises a first blade for dividing (or sectioning) the panel, and a second blade for engraving the panel at the bottom. Performing a lower engraving in the panel, before it is divided by the first blade, allows a more accurate parting cut, or sectioning, so that no defects are formed on the lower face of the panel itself.

Said frame 1 can also comprise two longitudinal members 11, i.e. two horizontal beams (for example, H-beams), respectively arranged on opposite sides of the supporting plane P and oriented so that their longitudinal axis is transversal to said cutting direction LT. Said longitudinal members 11 can be, for example, supported by respective uprights (not shown in the figure), in such a way that they are arranged above said supporting plane P.

The cutting machine M also comprises first supplying means 31, for supplying a first panel (not shown in the figure) on said supporting plane P along a supplying direction D, perpendicular to said cutting direction LT. In this way, said first panel can be advanced with an intermittent motion through the cutting station 2, to be, in a first time, blocked by means of said pressing device, and then cut by means of the cutting device.

Said first supplying means 31 comprise a first supporting system 41 for supporting first clamps 51. Said first supporting system 41 is coupled to said frame 1, in particular, to said longitudinal members 11, in a sliding manner along said supplying direction D. Said first supporting system 41 can be coupled to said longitudinal members 11, for example, through guides and skids systems (not shown in the figure) known in the field, and can be moved by means of actuator means (not shown in the figure), such as electric motors with rack/pinion or screw/nut system, and/or linear electric motors.

Said first clamps 51 can comprise an upper jaw and a lower jaw (not shown in the figure), movable with respect to each other to clamp said first panel, or to hold it and thus act as a bilateral constraint, to move said first panel in both directions (so-called intermittent advancement) along said supplying direction D.

Said first supporting system 41 supports one or more first clamps 51. Said first clamps 51 can slide above said supporting plane P along said supplying direction D, thus defining a first working area A1 that, with reference to the cutting direction LT, has, in a plan view, a first width LA1. Said first width LA1 is therefore a function that depends on the area of said supporting plane P swept by said first clamps 51, or on the position of said first clamps 51 on said first supporting system 41.

Said cutting machine also comprises second supplying means 32 for supplying a second panel (not shown in the figure) on said supporting plane P along said supplying direction D, perpendicular to said cutting direction LT. In this way, said second panel can be advanced with an intermittent motion through said cutting station 2 to be, in a first time, blocked by said pressing device and then cut through said cutting device. Said second supplying means 32 comprise a second supporting system 42 for supporting second clamps 52. Said second supporting system 42 is coupled to said frame 1, in particular to a longitudinal member 11, in a sliding manner along said supplying direction D. Said second supporting system 42 can be coupled to said longitudinal member, for example, by means of a guide and skid systems (not shown in the figure) known in the field, and can be moved by means of actuator means (not shown in the figure) known in the sector, such as, for example, electric motors with rack/pinion or screw/nut system, and/or linear electric motors.

Said second clamps 52 can comprise an upper jaw and a lower jaw (not shown in the figure) movable between them to clamp said second panel, or to hold it and thus act as a bilateral constraint, to be able to move said second panel in both directions (so-called intermittent advancement) along said supplying direction D. Said second supporting system 42 supports one or more second clamps 52. Said second clamps 52 can slide above said supporting plane P along said supplying direction D, thus defining a second working area A2 that, with reference to the cutting direction LT, has, in a plan view, a second width LA2. Said second width LA2 is, therefore, a function dependent on the area of said supporting plane P swept by said second clamps 52, or rather on the position of said second clamps 52 on said second supporting system 42.

As shown in figure 1, said first working area A1 and said second working area A2 are separated, i.e. without overlapping, adjacent and contiguous.

Still with reference to figure 1, said first supporting system 41 supports a plurality of first clamps 51, in particular six first clamps 51. A subset of said plurality of first clamps 51, in particular two first clamps 51, is coupled to said first supporting system 41 in a sliding manner along said cutting direction LT, for example, by means of a guides and skids system (not shown in the figure) known in the sector, and moved by first actuator means 6, such as, for example, electric motors with rack/pinion or screw/nut or cam system, hydraulic or pneumatic drives (pistons), or linear motors. Said first supporting system 41 also supports a plurality of second clamps 52, in particular four first clamps 51, fixed on it with respect to said cutting direction LT.

In figure 1, the first clamps 51, movable with respect to said first supporting system 41, integrally move along said cutting direction LT, however, in other embodiments, not shown, this first clamps 51 can be movable independently with respect to said first supporting system 41 along said cutting direction LT, presenting, for example, respective actuation means. Furthermore, if a high multiplicity (three or more) of first clamps 51 movable with respect to said first supporting system 41 are provided, hybrid versions can be realized with first clamps 51, integrally movable and independently others.

Still with reference to figure 1, said second supporting system 42 supports a plurality of second clamps 52, in particular, two second clamps 52. A subset of said plurality of second clamps 52, in particular one (1) second clamps 52, is coupled to said second supporting system 42 in a sliding manner along said cutting direction LT, for example, by means of a guides and skids system (not shown in the figure) known in the sector, and moved by second actuator means 7, such as, for example, electric motors with rack/pinion or screw/nut or cam system, hydraulic or pneumatic drives (pistons), or linear motors. Said second supporting system 42 also supports a plurality of second clamps 52, in particular one (1) second gripper 52, fixed thereon with respect to said cutting direction LT.

In other embodiments, not shown, there might be a plurality of second clamps 52 movable with respect to said second supporting system 42 along said cutting direction LT, and said second clamps 52 can be integrally movable, they can be movable in independently, presenting, for example, respective activation means, or can be realized hybrid versions with second clamps 52 movable integrally, and independently others.

The displacements of said first clamps 51 and/or of said second clamps 52 along said cutting direction LT can be continuous, i.e. said first clamps 51 and/or said second clamps 52 can (theoretically) finally assume positions with respect to the respective supporting systems. This is achieved by using, for example, electric motors. Alternatively, these movements can be discontinuous, or at discrete steps. This is achieved by using, for example, hydraulic or pneumatic drives (pistons).

Always with reference to figure 1, said first clamps 51 movable with respect to said first supporting system 41 faces said second working area A2, while said second clamps 52 movable with respect to said second supporting system 42 faces said first working area A1. In this way, advantageously, it is possible to vary (for example, widening) the second width LA2 of said second working area A2, by suitably moving said second clamps 52 and correspondingly varying (in the example, narrowing) the first width LA1 of said first working area A1, by suitably moving said first clamps 51, and vice versa. By being capable of varying the first width LA1 and, correspondingly, the second width LA2 of said respective working areas A1 and A2, the cutting machine is more flexible, being able to perform differential cuts of panels of variable maximum dimensions. In other words, according to the cutting schemes, or rather the dimensions (widths) of the two panels to be cut, the cutting machine, object of the present invention, can adapt said first width LA1 and said second width LA2 of said first working area A1 and second working area A2, by optimizing the cutting process.

Furthermore, since the distance between the second clamps 52 of said second supplying means 32 can be varied, it is always possible to clamp panels of different widths in an optimal and safe way, avoiding that these tend to skid during their supplying motion towards said cutting station 2.

Likewise, since the center-distance between the first clamps 51 of said first supplying means 31 can be varied, it is always possible to clamp panels of different widths in an optimal and safe way, avoiding that they tend to skid during their supplying motion towards said station 2.

The movements along said cutting direction LT of said first clamps 51 and of said second clamps 52 can occur simultaneously or sequentially.

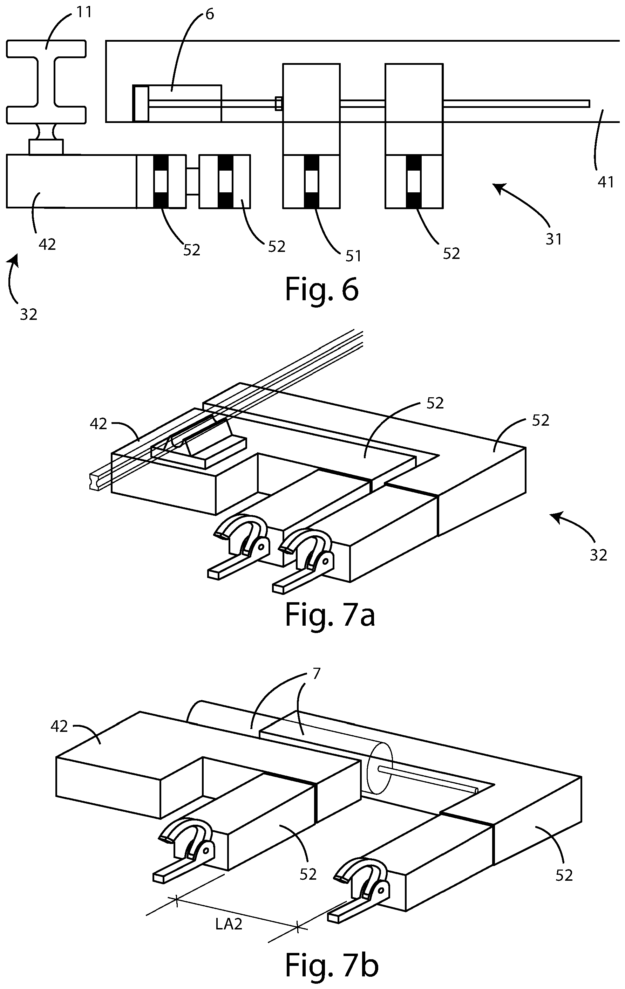

In figures 1 and 7a, the first clamps 51 are arranged on said first supporting system 41, by means of the first actuator means 6, so that the area swept by said first clamps 51 is as large as possible, while the second clamps 52 are arranged on said second supporting system 42, by means of the second actuator means 7, so that the area swept by said second clamps 52 is as small as possible. As a result, the first width LA1 is maximum, while the second width LA2 is minimum. In this configuration, the cutting machine can make differential cuts with a first panel having a large width and a second panel having a small width.

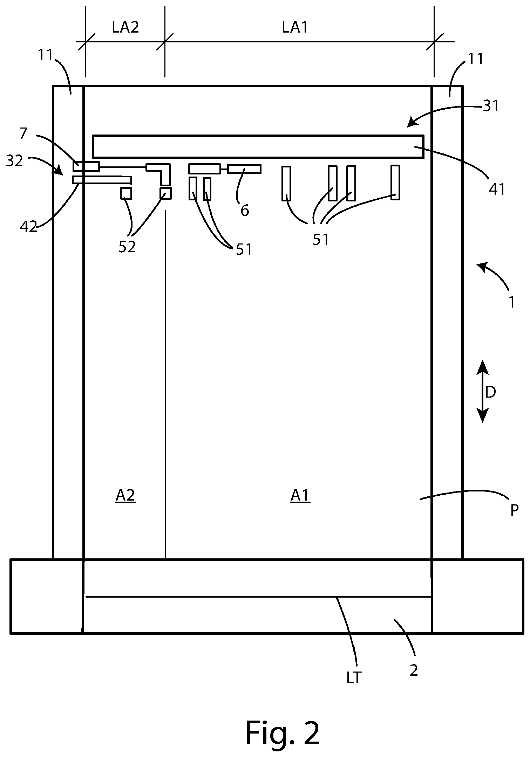

Vice versa, in figures 2 and 7b, the first clamps 51 are arranged on said first supporting system 41, by means of the first actuator means 6, so that the area swept by said first clamps 51 is as small as possible, while the second clamps 52 are arranged on said second supporting system 42, by means of the second actuator means 7 so that the area swept by said second clamps 52 is as large as possible. As a result, the first width LA1 is minimum, while the second width LA2 is maximum. In this configuration, the cutting machine can make differential cuts with a first panel having a width of reduced dimensions and a second panel having a width of greater dimensions than in the case shown in figure 1.

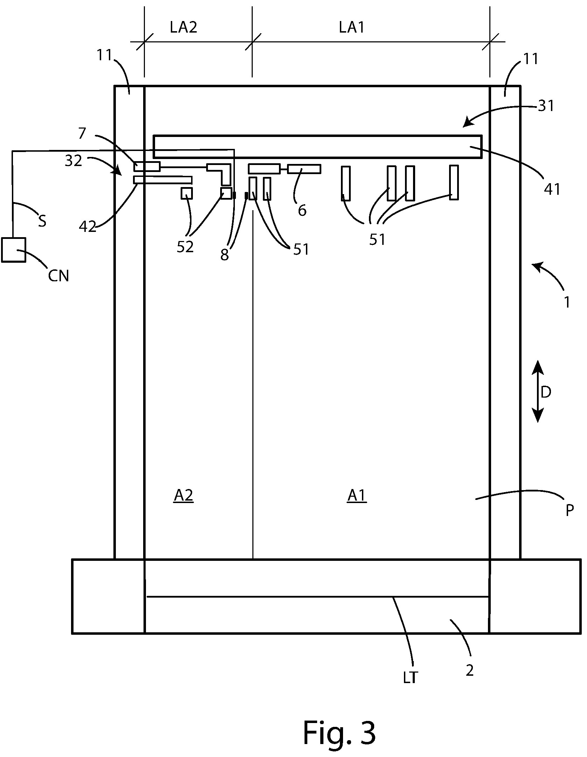

With reference to figure 3, it is schematically shown a plan view of the cutting machine (or panel saw) for cutting panels. In particular, the cutting machine comprises a sensor system 8, which have the purpose of detecting situations of potential interference between said first means 31 and said second supplying means 32, in particular between said first clamps 51 and said second clamps 52. In fact, when said first clamps 51 move towards said second working area A2 and/or said second clamps 52 move towards said first working area A1, an impact (so-called interference or collision) could occur between the two gripper or clamping systems. This event could lead to damage the cutting machine and the generation of dangerous situations for a possible operator, who might be close to it. Therefore, it is very advantageous equipping the cutting machine with said sensor system 8.

Said sensor system 8 is configured to generate an alarm signal S when it detects a possible potentially dangerous situation, for example, when said first clamps 51 and/or said second clamps 52 moves, and their distance is reduced beyond a safety threshold.

The generated signal S is transmitted, via a wired system or a wireless system (not shown in the figure), to an electronic control system CN. Once received the alarm signal S, the electronic control system CN can carry out appropriate operations to make the cutting machine or any operators safe, for example, by stopping the movement of said first clamps 51 and/or said second clamps 52, or commanding their motion in the opposite direction, to avoid the situation of potential danger.

Furthermore, the alarm signal S can be sent to a remote server (for example a cloud system) or to a mobile device (not shown in the figure), either directly or through said electronic control system CN. Again, a wired system or a wireless system can be used for the transmission.

The alarm signal S is therefore made accessible also outside the cutting machine, and therefore also the information that said sensor system 8 has detected a potentially dangerous situation is accessible. This allows operating different control and command functions of the cutting machine also from systems external to it. Furthermore, it can be advantageous to make it easily and quickly perceived to the operator that a potentially dangerous situation has been detected. For this purpose, said alarm signal S can be transformed into a video and/or audio and/or vibrational signal that can be easily recognized by the operator who, being informed, can carry out appropriate operations to make safe the cutting machine or the operator himself.

The sensor system 8 is coupled to said first clamps 51 and/or to said second clamps 52, and can comprise, for example, inductive sensors and/or optical sensors and/or ultrasonic sensors and/or laser sensors and/or electromechanical sensors. However, it is clear that other advantageous positions can be identified to arrange the elements of said sensor system 8, in particular, according to the type of sensors used.

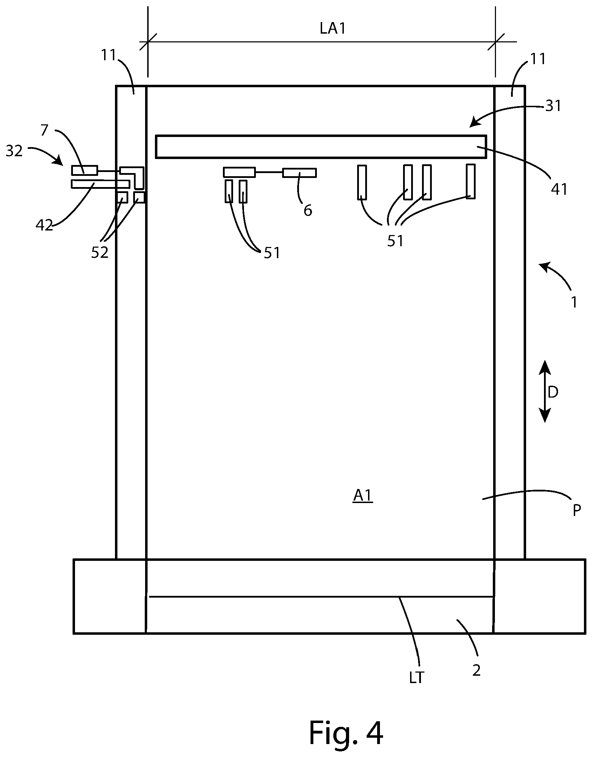

With reference to figure 4, the second supporting system 42 can be movable with respect to said frame 1 along said cutting direction (LT). In particular, said second supporting system 42 can be slidingly coupled to said frame 1, more particularly to a longitudinal member 11, along said cutting direction LT, for example, by means of a guides and skids system (not shown in the figure ), known in the field, and can be moved by means of actuator means (not shown in the figure), such as, for example, electric motors with rack/pinion or screw/nut or cam system, hydraulic or pneumatic drives (pistons), or linear motors. In this way, said second supporting system 42 can assume a first exclusion position, in which said second clamps 52 are arranged, in plan, outside said second working area A2, and a second working position, in which said second clamps 52 are arranged, in plan view, inside said second working area A2, in particular above said supporting plane P.

Said second clamps 52 can also assume intermediate positions between said first exclusion position and said second working position. The cutting machine can, therefore, process a single panel using only the first supplying means 31 and exploiting the whole dimension of the supporting plane P, or it can perform differential cuts on two panels using both the first means 31 and the second supplying means 32.

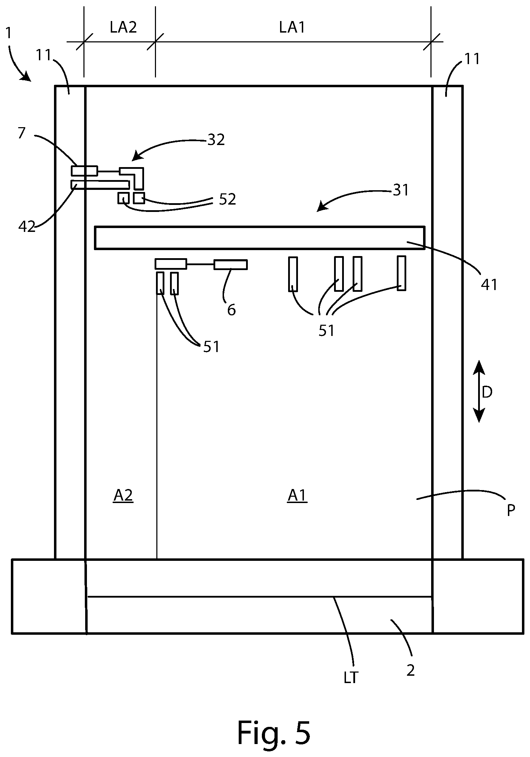

With reference to figures 5 and 6, said first supporting system 41 and said second supporting system 42 are coupled to said frame 1, in particular to said longitudinal members 11, in such a way that said first means 31 and said second supplying means 32 can slide one above the other along said supplying direction D, without interfering. In particular, the first supporting system 41 can be slidingly coupled on the lateral faces of said longitudinal members 11, while the second supporting system 42 can be slidingly coupled on the lower face of a longitudinal member 11. In this way, said first supporting system 41 and said second supporting system 42 lie on different planes, or at different heights. In this way, the first supplying means 31, and the second supplying means 32 can slide one above the other along the supplying direction D, and the cutting machine can make the differential cuts without risking that there are knocks or collisions between the two supplying systems of the piece.

### Advantages

It is an advantage of the present invention that of allowing greater flexibility in the cutting patterns that the cutting machine can realize.

Another advantage of the present invention is that of being able to carry out differential cuts of panels having variable maximum dimensions.

A further advantage of the present invention is that of being able to realize more precise, accurate, and safe differential cuts.

Another advantage of the present invention is that of providing a constructively simple and economical cutting machine for cutting panels.

## Claims

1. Machine for cutting (M) panels, such as panel made of wood, materials obtained from wood or wood-like materials, fiberglass, plastic and the like, comprising:
a supporting frame (1) having a horizontal supporting plane (P) for receiving a first and a second panel to be cut;
a cutting station (2) movable along a cutting direction (LT) for cutting said first and said second panel;
first supplying means (31) for supplying said first panel on said supporting plane (P) along a supplying direction (D) perpendicular to said cutting direction (LT), said first supplying means (31) comprising
a first supporting system (41) coupled to said frame (1), in a sliding way along said supplying direction (D),
a plurality of first clamps (51) for clamping said first panel, coupled to said first supporting system (41), so as to slide above said supporting plane (P) defining a first working area (A1),
second supplying means (32) for supplying said second panel (L2) on said supporting plane (P) along said supplying direction (D), said second supplying means (32) comprising
a second supporting system (42) coupled to said frame (1), in a sliding way along said supplying direction (D),
a plurality of second clamps (52) for clamping said second panel, coupled to said second supporting system (42), so as to slide above said supporting plane (P) defining a second working area (A2), wherein
at least one subset of said plurality of first clamps (51) is movable with respect to said first supporting system (41) parallel to said cutting direction (LT), and wherein said first working area (A1) has, in plan, a first width (LA1) variable according to the position of said plurality of first clamps (51) with respect to said first supporting system (41), wherein said cutting machine (M) is **characterized**
**in that** at least one subset of said plurality of second clamps (52) is movable with respect to said second supporting system (42) parallel to said cutting direction (LT),
**in that** said at least one subset of said plurality of second clamps (52) is movable by means of second actuator means (7), so that said second working area (A2) swept by at least one subset of said plurality of second clamps (52) is varied, and
wherein said second working area (A2) has, in plan, a second width (LA2) variable according to the position of said plurality of second clamps (52) with respect to said second supporting system (42), such that said second width (LA2) is, therefore, a function dependent on the area of said supporting plane (P) swept by said plurality of second clamps (52), or rather on the position of said plurality of second clamps (52) on said second supporting system (42).

2. Machine (M) according to the preceding claim, **characterized**
**in that** said first supporting system (41) supports a plurality of first clamps (51),
**in that** at least one subset of said plurality of first clamps (51) is movable with respect to said first supporting system (41) along said cutting direction (LT), and
**in that** said at least one subset of said plurality of first clamps (51) is facing said second working area (A2).

3. Machine (M) according to the preceding claim, **characterized in that** said first clamps of said at least one subset of said plurality of first clamps (51) are movable with respect to said first supporting system (41) in integral or independent way, in particular by means of respective first actuator means (6) associated with them, or in hybrid way.

4. Machine (M) according to any one of the preceding claims, **characterized in that** said first clamps (51) are movable with respect to said first supporting system (41) in a continuous way or in discrete steps.

5. Machine (M) according to any one of the preceding claims, **characterized**
**in that** said second supporting system (42) supports a plurality of second clamps (52),
**in that** at least one subset of said plurality of second clamps (52) is movable with respect to said second supporting system (42) parallel to said cutting direction (LT), and
**in that** said at least one subset of said plurality of second clamps (52) is facing said first working area (A1).

6. Machine (M) according to the preceding claim, **characterized in that** said second clamps of said at least one subset of said plurality of second clamps (52) are movable with respect to said second supporting system (42) in integral or independent way, in particular by means of respective second actuator means (7) associated with them, or in hybrid way.

7. Machine (M) according to any one of the preceding claims, **characterized in that** said second clamps (52) are movable with respect to said second supporting system (42) in a continuous way or in discrete steps.

8. Machine (M) according to any one of the preceding claims, **characterized**
**in that** it comprises a sensor system (8) capable of detecting a possible interference between said first supplying means (31) and said second supplying means (32), in particular between said first clamps (51) and said second clamps (52),
wherein said sensor system (8) is configured for generating an alarm signal (S) and for sending said alarm signal (S) to an electronic control system (CN).

9. Machine (M) according to the preceding claim, **characterized in that** said sensor system (8) is coupled to said first clamps (51) and/or to said second clamps (52).

10. Machine (M) according to any one of claims 8 or 9, **characterized in that** said sensor system (8) comprises inductive sensors and/or optical sensors and/or ultrasonic sensors and/or laser sensors and/or electromechanical sensors.

11. Machine (M) according to any one of claims 8 - 10, **characterized in that** said alarm signal (S) is sent to a remote server and/or mobile device.

12. Machine (M) according to any one of claims 8 - 11, **characterized in that** said alarm signal (S) is detected by an operator, said signal (S) being transformed into a video and/or audio and/or vibrational signal.

13. Machine (M) according to any one of the preceding claims, **characterized**
**in that** said first supporting system (41) and said second supporting system (42) are coupled to said frame (1),
wherein said first supplying means (31) and said second supplying means (32) slide over each other as necessary without interfering along said supplying direction (D).

14. Machine (M) according to any one of the preceding claims, **characterized**
**in that** said second supporting system (42) is movable with respect to said frame (1) along said cutting direction (LT),
wherein said second supporting system (42) has a first exclusion position, wherein said second clamps (52) are arranged, in plan, out of said second working area (A2), and a second working area, wherein said second clamps (52) are arranged, in plan, in said second working area (A2), in particular above said supporting plane (P).

## Patentansprüche

1. Maschine zum Schneiden (M) von Platten, wie Platten aus Holz, Materialien aus Holz oder holzähnlichen Materialien, Glasfaser, Kunststoff und dergleichen, umfassend:
einen Stützrahmen (1) mit einer horizontalen Stützebene (P) zur Aufnahme einer ersten und einer zweiten zu schneidenden Platte;
eine Schneidestation (2), die entlang einer Schneidrichtung (LT) beweglich ist, um die erste und
die zweite Platte zu schneiden;
eine erste Zuführeinrichtung (31) zum Zuführen der ersten Platte auf der Stützebene (P) entlang einer Zuführrichtung (D), die senkrecht zur Schneidrichtung (LT) verläuft, wobei die erste Zuführeinrichtung (31) umfasst
ein erstes Trägersystem (41), das mit dem Rahmen (1) entlang der Zuführrichtung (D) verschiebbar verbunden ist,
eine Vielzahl von ersten Klemmen (51) zum Festklemmen der ersten Platte, die mit dem ersten Trägersystem (41) verbunden sind, so dass sie über der Trägerebene (P) gleiten, die einen ersten Arbeitsbereich (A1) definiert,
eine zweite Zuführeinrichtung (32) zum Zuführen der zweiten Platte (L2) auf der Stützebene (P) entlang der Zuführrichtung (D), wobei die zweite Zuführeinrichtung (32) umfasst
ein zweites Trägersystem (42), das mit dem Rahmen (1) entlang der Zuführrichtung (D) verschiebbar verbunden ist,
eine Vielzahl von zweiten Klemmen (52) zum Festklemmen der zweiten Platte, die mit dem zweiten Trägersystem (42) verbunden sind, so dass sie oberhalb der Trägerebene (P) gleiten, die einen zweiten Arbeitsbereich (A2) definiert,
wobei
mindestens eine Untergruppe der mehreren ersten Klemmen (51) in Bezug auf das erste Trägersystem (41) parallel zur Schneidrichtung (LT) beweglich ist, und
wobei der erste Arbeitsbereich (A1) in der Ebene eine erste Breite (LA1) aufweist, die entsprechend der Position der mehreren ersten Klemmen (51) in Bezug auf das erste Trägersystem (41) variabel ist, wobei die Schneidmaschine (M) **dadurch gekennzeichnet ist, dass** dass mindestens eine Untergruppe der Vielzahl von zweiten Klemmen (52) in Bezug auf das zweite Trägersystem (42) parallel zur Schneidrichtung (LT) beweglich ist,
dass die mindestens eine Untergruppe der Vielzahl von zweiten Klemmen (52) mittels einer zweiten Betätigungseinrichtung (7) beweglich ist, so dass der zweite Arbeitsbereich (A2), der von mindestens einer Untergruppe der Vielzahl von zweiten Klemmen (52) überstrichen wird, verändert wird, und
wobei der zweite Arbeitsbereich (A2) in der Draufsicht eine zweite Breite (LA2) aufweist, die in Abhängigkeit von der Position der mehreren zweiten Klemmen (52) in Bezug auf das zweite Trägersystem (42) variabel ist,
so dass die zweite Breite (LA2) daher eine Funktion ist, die von der Fläche der Stützebene (P) abhängt,
die von den mehreren zweiten Klemmen (52) überstrichen wird, oder vielmehr von der Position der mehreren zweiten Klemmen (52) an dem zweiten Trägersystem (42).

2. Maschine (M) nach dem vorhergehenden Anspruch, **dadurch gekennzeichnet**
**dass** das erste Trägersystem (41) eine Vielzahl von ersten Klammern (51) trägt,
**dass** mindestens eine Untergruppe der mehreren ersten Klemmen (51) in Bezug auf das erste Trägersystem (41) entlang der Schnittrichtung (LT) beweglich ist, und dass die mindestens eine Untergruppe der mehreren ersten Klammern (51) dem zweiten Arbeitsbereich (A2) zugewandt ist.

3. Maschine (M) nach dem vorhergehenden Anspruch, **dadurch gekennzeichnet, dass** die ersten Klammern der mindestens einen Untergruppe der Vielzahl von ersten Klammern (51) in Bezug auf das erste Trägersystem (41) in integraler oder unabhängiger Weise beweglich sind, insbesondere mittels entsprechender erster Betätigungsmittel (6), die ihnen zugeordnet sind, oder in hybrider Weise.

4. Maschine (M) nach einem der vorhergehenden Ansprüche, **dadurch gekennzeichnet, dass** die ersten Klammern (51) in Bezug auf das erste Trägersystem (41) kontinuierlich oder in diskreten Schritten beweglich sind.

5. Maschine (M) nach einem der vorhergehenden Ansprüche, **dadurch gekennzeichnet**
**dass** das zweite Trägersystem (42) eine Vielzahl von zweiten Klammern (52) trägt,
**dass** mindestens eine Untergruppe der mehreren zweiten Klemmen (52) in Bezug auf das zweite Trägersystem (42) parallel zur Schnittrichtung (LT) beweglich ist, und dass die mindestens eine Untergruppe der mehreren zweiten Klammern (52) dem ersten Arbeitsbereich (A1) zugewandt ist.

6. Maschine (M) nach dem vorhergehenden Anspruch, **dadurch gekennzeichnet, dass** die zweiten Klammern der mindestens einen Untergruppe der Vielzahl von zweiten Klammern (52) in Bezug auf das zweite Trägersystem (42) in integraler oder unabhängiger Weise beweglich sind, insbesondere mittels entsprechender zweiter Betätigungsmittel (7), die ihnen zugeordnet sind, oder in hybrider Weise.

7. Maschine (M) nach einem der vorhergehenden Ansprüche, **dadurch gekennzeichnet, dass** die zweiten Klammern (52) in Bezug auf das zweite Trägersystem (42) kontinuierlich oder in diskreten Schritten beweglich sind.

8. Maschine (M) nach einem der vorhergehenden Ansprüche, **dadurch gekennzeichnet**
**dass** sie ein Sensorsystem (8) umfasst, das in der Lage ist, eine mögliche Interferenz zwischen den ersten Zuführungsmitteln (31) und den zweiten Zuführungsmitteln (32), insbesondere zwischen den ersten Klemmen (51) und den zweiten Klemmen (52), zu erfassen,
wobei das Sensorsystem (8) zum Erzeugen eines Alarmsignals (S) und zum Senden des Alarmsignals (S) an ein elektronisches Steuersystem (CN) konfiguriert ist.

9. Maschine (M) nach dem vorhergehenden Anspruch, **dadurch gekennzeichnet, dass** das Sensorsystem (8) mit den ersten Klammern (51) und/oder mit den zweiten Klammern (52) gekoppelt ist.

10. Maschine (M) nach einem der Ansprüche 8 oder 9, **dadurch gekennzeichnet, dass** das Sensorsystem (8) induktive Sensoren und/oder optische Sensoren und/oder Ultraschallsensoren und/oder Lasersensoren und/oder elektromechanische Sensoren umfasst.

11. Maschine (M) nach einem der Ansprüche 8-10, **dadurch gekennzeichnet, dass** das Alarmsignal (S) an einen entfernten Server und/oder ein mobiles Gerät gesendet wird.

12. Maschine (M) nach einem der Ansprüche 8-11, **dadurch gekennzeichnet, dass** das Alarmsignal (S) von einem Bediener erfasst wird, wobei das Signal (S) in ein Video- und/oder Audio- und/oder Vibrationssignal umgewandelt wird.

13. Maschine (M) nach einem der vorhergehenden Ansprüche, **dadurch gekennzeichnet**
**dass** das erste Stützsystem (41) und das zweite Stützsystem (42) mit dem Rahmen (1) verbunden sind, wobei die erste Zuführeinrichtung (31) und die zweite Zuführeinrichtung (32) nach Bedarf übereinander gleiten, ohne sich entlang der Zuführrichtung (D) zu behindern.

14. Maschine (M) nach einem der vorhergehenden Ansprüche, **dadurch gekennzeichnet**
**dass** das zweite Trägersystem (42) in Bezug auf den Rahmen (1) entlang der Schnittrichtung (LT) beweglich ist,
wobei das zweite Stützsystem (42) eine erste Ausschlussposition, in der die zweiten Klammern (52) in der Draufsicht außerhalb des zweiten Arbeitsbereichs (A2) angeordnet sind, und einen zweiten Arbeitsbereich aufweist, in dem die zweiten Klammern (52) in der Draufsicht in dem zweiten Arbeitsbereich (A2), insbesondere oberhalb der Stützebene (P), angeordnet sind.

## Revendications

1. Machine à découper des panneaux (M), tels que des panneaux en bois, en matériaux obtenus à partir de bois ou de matériaux similaires, en fibre de verre, en plastique et similaires, comprenant:
un cadre de support (1) ayant un plan de support horizontal (P) pour recevoir un premier et un second panneau à découper;
un poste de coupe (2) mobile le long d'une direction de coupe (LT) pour couper ledit premier et ledit second panneau;
premier moyen d'alimentation (31) pour alimenter ledit premier panneau sur ledit plan de support (P) le long d'une direction d'alimentation (D) perpendiculaire à ladite direction de coupe (LT), ledit premier moyen d'alimentation (31) comprenant
un premier système de support (41) couplé audit cadre (1), de manière coulissante le long de ladite direction d'alimentation (D),
une pluralité de premières pinces (51) pour le serrage dudit premier panneau, couplées audit premier système de support (41), de manière à glisser au-dessus dudit plan de support (P) définissant une première zone de travail (A1),
deuxième moyen d'alimentation (32) pour alimenter ledit deuxième panneau (L2) sur ledit plan de support (P) le long de ladite direction d'alimentation (D), ledit deuxième moyen d'alimentation (32) comprenant
un second système de support (42) couplé audit cadre (1), de manière coulissante le long de ladite direction d'alimentation (D),
une pluralité de deuxièmes pinces (52) pour serrer ledit deuxième panneau, couplées au deuxième système de support (42), de manière à glisser au-dessus dudit plan de support (P) définissant une deuxième zone de travail (A2),
dans lequel
au moins un sous-ensemble de ladite pluralité de premières pinces (51) est mobile par rapport audit premier système de support (41) parallèlement à ladite direction de coupe (LT), et dans lequel ladite première zone de travail (A1) a, en plan, une première largeur (LA1) variable en fonction de la position de ladite pluralité de premières pinces (51) par rapport audit premier système de support (41), dans lequel ladite machine à découper (M) est caractérisée en ce sens qu'au moins un sous-ensemble de ladite pluralité de deuxièmes pinces (52) est mobile par rapport audit deuxième système de support (42) parallèlement à ladite direction de coupe (LT),
en ce que ledit au moins un sous-ensemble de ladite pluralité de deuxièmes pinces (52) est déplacé au moyen d'un deuxième moyen d'actionnement (7), de sorte que ladite deuxième zone de travail (A2) balayée par au moins un sous-ensemble de ladite pluralité de deuxièmes pinces (52) est modifiée,
et
dans laquelle ladite deuxième zone de travail (A2) a, en plan, une deuxième largeur (LA2) variable selon la position de ladite pluralité de deuxièmes pinces (52) par rapport audit deuxième système de support (42), de sorte que ladite deuxième largeur (LA2) est, par conséquent, une fonction dépendant de la surface dudit plan de support (P) balayée par ladite pluralité de deuxièmes pinces (52), ou plutôt de la position de ladite pluralité de deuxièmes pinces (52) sur ledit deuxième système de support (42).

2. Machine (M) selon la revendication précédente, **caractérisée**
**en ce que** ledit premier système de support (41) supporte une pluralité de premières pinces (51),
**en ce qu'**au moins un sous-ensemble de ladite pluralité de premières pinces (51) est mobile par rapport audit premier système de support (41) le long de ladite direction de coupe (LT), et
en ce sens que ledit au moins un sous-ensemble de ladite pluralité de premières pinces (51) fait face à ladite deuxième zone de travail (A2).

3. Machine (M) selon la revendication précédente, **caractérisée en ce que** lesdites premières pinces dudit au moins un sous-ensemble de ladite pluralité de premières pinces (51) sont mobiles par rapport audit premier système de support (41) de manière intégrale ou indépendante, notamment au moyen de premiers moyens actionneurs (6) respectifs qui leur sont associés, ou de manière hybride.

4. Machine (M) selon l'une quelconque des revendications précédentes, **caractérisée en ce que** lesdites premières pinces (51) sont mobiles par rapport audit premier système de support (41) de manière continue ou par étapes discrètes.

5. Machine (M) selon l'une quelconque des revendications précédentes, **caractérisée en ce que** ledit deuxième système de support (42) supporte une pluralité de deuxièmes pinces (52),
en ce sens qu'au moins un sous-ensemble de ladite pluralité de deuxièmes pinces (52) est mobile par rapport audit deuxième système de support (42) parallèlement à ladite direction de coupe (LT), et
en ce sens que ledit au moins un sous-ensemble de ladite pluralité de deuxièmes pinces (52) fait face à ladite première zone de travail (A1).

6. Machine (M) selon la revendication précédente, **caractérisée en ce que** lesdites secondes pinces dudit au moins un sous-ensemble de ladite pluralité de secondes pinces (52) sont mobiles par rapport audit second système de support (42) de manière intégrale ou indépendante, notamment au moyen de seconds moyens d'actionnement (7) respectifs qui leur sont associés, ou de manière hybride.

7. Machine (M) selon l'une quelconque des revendications précédentes, **caractérisée en ce que** lesdites secondes pinces (52) sont mobiles par rapport audit second système de support (42) de manière continue ou par étapes discrètes.

8. Machine (M) selon l'une quelconque des revendications précédentes, **caractérisée en ce qu'**il comprend un système de capteurs (8) capable de détecter une éventuelle interférence entre lesdits premiers moyens d'alimentation (31) et lesdits seconds moyens d'alimentation (32), en particulier entre lesdits premiers colliers (51) et lesdits seconds colliers (52),
dans lequel ledit système de capteurs (8) est configuré pour générer un signal d'alarme (S) et pour envoyer ce signal d'alarme (S) à un système de contrôle électronique (CN).

9. Machine (M) selon la revendication précédente, **caractérisée en ce que** ledit système de capteurs (8) est couplé aux premières pinces (51) et/ou aux secondes pinces (52).

10. Machine (M) selon l'une quelconque des revendications 8 ou 9, **caractérisée par le fait que** ledit système de capteurs (8) comprend des capteurs inductifs et/ou des capteurs optiques et/ou des capteurs à ultrasons et/ou des capteurs laser et/ou des capteurs électromécaniques.

11. Machine (M) selon l'une des revendications 8 - 10, **caractérisée par le fait que** le signal d'alarme (S) est envoyé à un serveur distant et/ou à un dispositif mobile.

12. Machine (M) selon l'une des revendications 8 - 11, **caractérisée par le fait que** ledit signal d'alarme (S) est détecté par un opérateur, ledit signal (S) étant transformé en signal vidéo et/ou audio et/ou vibratoire.

13. Machine (M) selon l'une quelconque des revendications précédentes, **caractérisée en ce que** ledit premier système de support (41) et ledit second système de support (42) sont couplés audit cadre (1),
dans lequel ledit premier moyen d'alimentation (31) et ledit second moyen d'alimentation (32) glissent l'un sur l'autre selon les besoins sans interférer le long de ladite direction d'alimentation (D).

14. Machine (M) selon l'une quelconque des revendications précédentes, **caractérisée en ce que** ledit second système de support (42) est mobile par rapport audit cadre (1) le long de ladite direction de coupe (LT),
dans lequel ledit second système de support (42) a une première position d'exclusion, dans laquelle lesdites secondes pinces (52) sont disposées, en plan, en dehors de ladite seconde zone de travail (A2), et une seconde zone de travail, dans laquelle lesdites secondes pinces (52) sont disposées, en plan, dans ladite seconde zone de travail (A2), en particulier au-dessus dudit plan de support (P).
